# FASCICULE DE BREVET EUROPEEN

(11) **EP 1 177 473 B1**
(45) Date de publication et mention de la délivrance du brevet: **06.04.2005**
(21) Numéro de dépôt: 00925360.0
(22) Date de dépôt: 28.04.2000
(51) Int. Cl.: G02B 27/01

(54) **DISPOSITIF OPTIQUE POUR CASQUE**
OPTISCHE VORRICHTUNG FÜR EINEN HELM
OPTICAL DEVICE FOR HELMET

(30) Priorité: 07.05.1999 FR 9905866
(43) Date de publication de la demande: 06.02.2002
(73) Titulaire: THALES AVIONICS S.A., 78140 Vélizy Villacoublay (FR)
(72) Inventeur: Baudou, Joel Thomson-CSF Prop. Int. Dept. Brevets, 94117 Arcueil Cedex (FR); Pennetier, Ludovic Thomson-CSF P. I. Dept. Brevets, 94117 Arcueil Cedex (FR)
(74) Mandataire: Vigand, Régis Louis Michel
(86) Numéro de dépôt international: PCT/FR2000/001164
(87) Numéro de publication internationale: WO 2000/068726

(56) Documents cités:
- EP-A- 0 206 324
- EP-A- 0 551 781
- WO-A-94/14349
- WO-A-94/24658
- WO-A-96/07947
- WO-A-97/33270
- GB-A- 2 295 938
- US-A- 4 198 114
- US-A- 5 543 968

## Description

La présente invention a pour objet un dispositif optique pour casque. Son domaine d'application est celui du pilotage d'engins. II peut s'agir de chars, d'hélicoptères, d'avions, ou de tout autre engin dont le pilote a besoin d'informations, mais ne peut se permettre de distraire son attention du pilotage pour les obtenir. II peut s'agir d'un confort apporté au pilote. Le but de l'invention est d'obtenir une meilleure qualité optique pour le dispositif, de diminuer le poids du dispositif et de réduire le nombre de pièces nécessaires à la mise en oeuvre du dispositif.

A l'heure actuelle les dispositifs optiques sont composés d'un module optique et d'un capot de protection. Le module optique est défini par une fonction dont la finalité est de projeter sur une visière semi-réfléchissante une image issue d'une source d'images. Ces sources d'images vont du simple capteur au tube cathodique. La fonction est réalisée grâce à des éléments comme des lentilles des miroirs ou autres dispositifs connus en optique et maintenus et positionnés dans une structure mécanique. Pour garantir les performances d'affichage et de visée, la structure mécanique du module doit être rigide et stable dans toutes les conditions d'environnement de la mission. Cette rigidité ne pouvant être assurée par la coque du casque, le module optique comporte sa propre structure mécanique. En effet le casque doit être déformable afin de pouvoir être mis en place sur la tête du porteur. La structure mécanique du visuel et le corps de l'optique de projection qui intègre les lentilles et miroirs sont généralement des éléments séparés pour des raisons de réalisation. La structure mécanique du module optique est constituée d'un assemblage de tubes, en forme de U autour du casque. Ces tubes intègrent les composants optiques et supporte les générateurs d'images, le capteur de position, la visière de protection, les éléments de verrouillage au casque et le capot de protection. Le matériau de cette structure est un thermoplastique renforcé de fibre de verre pour améliorer sa résistance et sa rigidité. La structure ainsi constituée n'étant pas suffisamment rigide, elle est renforcée par des platines en matériau composite fibres longues stratifiées. Cette structure présente un mauvais comportement en température à cause des dilatations différentielles du corps d'optique et des platines de renforcement. Les dilatations différentielles entraînent une déformation hétérogène du module optique préjudiciable à la qualité optique en cas de variation de température en cours de mission. Le dispositif optique n'est donc plus en mesure de remplir correctement sa fonction, ce qui entraîne une fatigue oculaire et/ou des erreurs d'appréciation de la part du pilote.

Les métaux ne sont pas utilisables pour renforcer la structure mécanique du dispositif optique puisque ceux-ci, en plus d'une déformation différentielle par rapport au reste de la structure et de leur poids, ont des propriétés électromagnétiques qui perturberaient le repérage du positionnement du casque dans l'habitacle, donc le système de visée.

Un autre problème de cette mise en oeuvre du module optique, est les formes anguleuses et irrégulières qui en résultent. Cette géométrie induit des risques d'accrochage dans l'habitacle, ou lors de manutentions, ou lors d'entretien, ce qui entraînerait une dégradation des performances du module optique à cause d'un déplacement qui en résulterait par exemple. De plus ces formes ne sont pas du tout aérodynamiques, ce qui peut poser des problèmes en cas d'éjection du pilote notamment d'un avion d'armes. En effet l'éjection peut avoir lieu à une vitesse élevée, et si la prise au vent apparent du casque est trop importante, le pilote pourrait avoir la nuque brisée. Ces considérations conduisent à munir le module optique d'un capot de protection. Ce capot réduit tous les effets précédemment cités, mais il augmente le poids du casque. Cette augmentation de poids est préjudiciable au pilote, notamment lors d'évolution brutale ou de changement de direction de l'appareil.

Le document WO-A-9 414 349 divulgue un casque de protection équipé de systèmes optroniques. Le document WO-A-9 424 658 divulgue un système de projection destiné à être monté sur la tête d'un utilisateur.

L'invention résout ces problèmes en intégrant le module optique et le capot de protection dans un même bloc. Ce bloc est réalisé dans un matériau composite dont les propriétés de rigidité et de poids sont sans commune mesure avec les thermoplastiques ou les métaux. Les performances de ces matériaux sont aussi excellentes en température, puisqu'ils sont utilisés dans les technologies spatiales. En effet pour les matériaux cités des modules de rigidité ayant des valeurs de 27 N/mm²/kg/dm³ pour un alliage d'aluminium, 25 N/mm²/kg/dm³ pour de l'acier, 15 N/mm²/kg/dm³ pour un thermoplastique renforcé et 35 N/mm²/kg/dm³ pour le composite utilisé. Le coefficient de dilatation du composite choisi est voisin de 10⁻⁶ mm/°C.

L'invention a donc pour objet un dispositif optique comportant toute les caractéristiques récitées dans la première revendication. Des modes de réalisation additionels sont définis dans les revendications dépendantes.

L'invention sera mieux comprise à la lecture de la description qui suit et à l'examen des figues qui l'accompagnent. Celles-ci ne sont présentées qu'à titre indicatif et nullement limitatif de l'invention. Les figures montrent :
- Figure 1 : une illustration d'un pilote portant un casque destiné à recevoir un dispositif optique selon l'invention ;
- Figure 2 : une illustration de la structure mécanique du dispositif optique selon l'invention ;
- Figure 3 : une vue en coupe d'une section de la structure du dispositif optique selon l'invention ;
- Figure 4 : une vue en coupe d'une cloison de la structure métallique du dispositif optique selon l'invention.

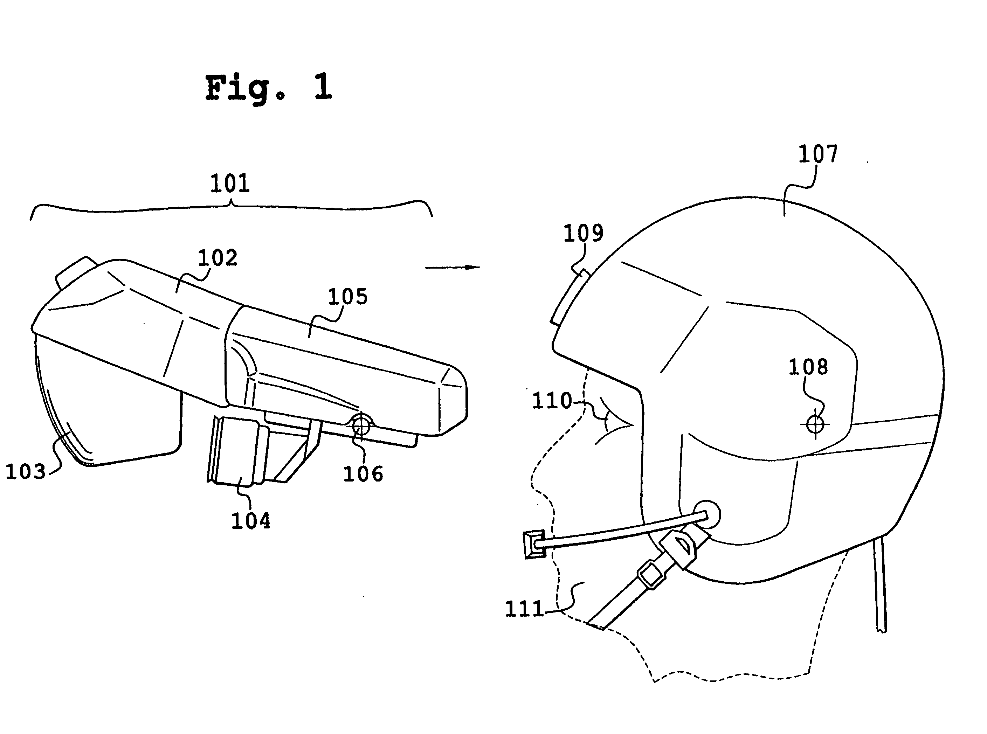

La figure 1 montre un dispositif 101 optique selon l'invention, comportant un caisson 102. A ce caisson 102 sont fixés une visière 103 de projection, une source 104 d'images, et un dispositif 106 de fixations du dispositif 101 à un casque 107. Dans un exemple la source 104 d'images est une caméra de vision nocturne. La caméra 104 est fixée sur le dispositif 101, en dessous de celui-ci. Une fois le dispositif 101 en place sur le casque 107 la caméra 104 est à hauteur des yeux du pilote. Ainsi la caméra 104 voit ce que voit le pilote. Les images filmées par la caméra 104 sont projetées via un module optique non représenté, sur la visière 103 de projection. La caméra 104 est maintenue dans un emplacement aménagé dans le caisson 102. La rigidité de la liaison entre le caisson 102 et la caméra 104 est assurée par le matériau dans lequel est réalisé le caisson 102.

Le dispositif 101 comporte dans sa partie arrière un carénage 105. La figure 1 est une vue de profil, la deuxième branche du dispositif optique ayant une forme en U n'apparaît donc pas sur la figure 1. Cependant il est évident qu'il existe un deuxième carénage tel que le carénage 105 sur la deuxième branche du dispositif optique. Le carénage 105 est rendu nécessaire pour des raisons de réalisation du caisson 102 et de mise en oeuvre. En effet le matériau dans lequel est réalisé le caisson 102 interdit les formes complexes. De plus la mise en place de certains dispositifs sur le caisson nécessite un accès facile. Une fois en place ces dispositifs doivent néanmoins être protégés, d'où l'utilisation du carénage 105.

Le casque 107 possède un dispositif 108 qui est le pendant du dispositif 106 de fixation du dispositif 101 optique. Une fois le dispositif 106 enclenché sur le dispositif 108, le dispositif 101 vient en butée sur une ornière 109 du casque 107. Cette ornière 109 est située à l'avant du casque 107, au niveau du milieu du front du porteur. II est prévu dans une structure de caisson un élément, dépendant de cette ornière 109, qui maintient le dispositif 101 et lui permet de pivoter autour d'un axe passant par le centre du dispositif 108 et perpendiculaire au casque en ce point. La visière 103 est alors située en vis à vis des yeux 110 d'un pilote 111 sur la tête duquel est fixé le casque 107. Le dispositif 101 optique est donc fixé sur le haut de la tête du pilote 111. La réduction de masse du dispositif 101 optique permet donc de diminuer les efforts appliqués au cou du pilote 111 lors de déplacements violents de son appareil. Cela est important notamment dans le cas d'un avion d'armes.

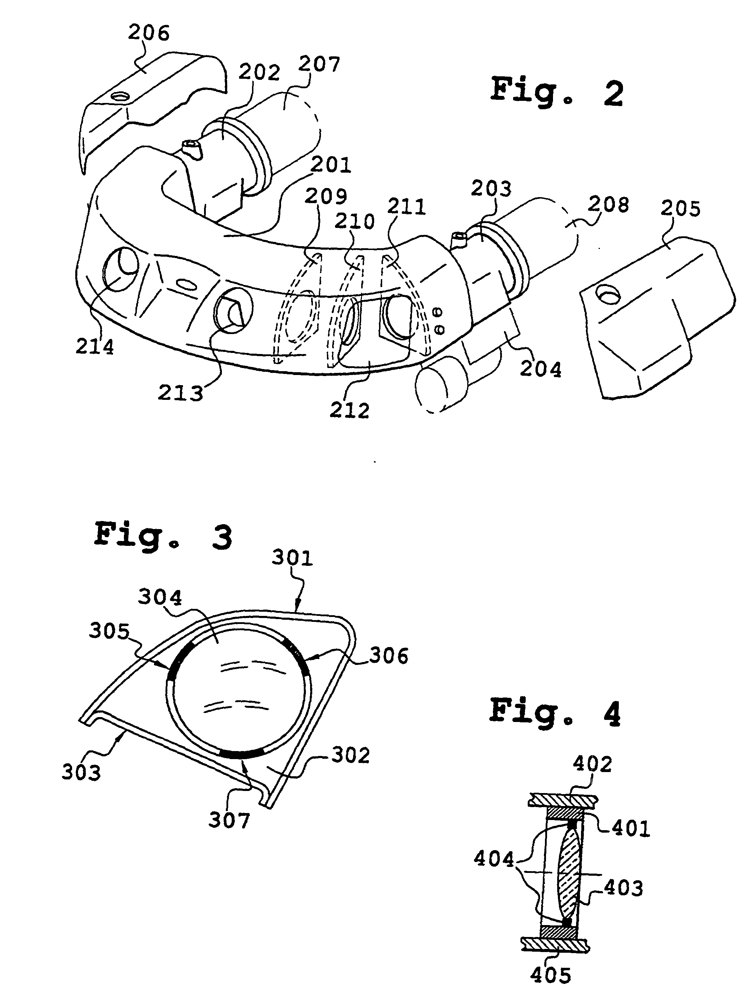

La figure 2 montre un caisson 201. Ce caisson 201 a une forme en U et comporte deux branches 202 et 203. La branche 203 est prévue pour recevoir une caméra 204 et un carénage 205. De manière symétrique la branche 202 est prévue pour recevoir un carénage 206 et une caméra non représentée. Le carénage 205 ne recouvre que la branche 203 située à l'arrière du caisson 201. La partie avant du caisson 201 a une forme aérodynamique dont les carénages 205 et 206 sont le prolongement. Dans les dispositifs existants le module optique est protégé par un capot sans que l'étanchéité soit assurée. Ainsi l'air peut s'engouffrer sous ce capot et produire des pressions. Cela est encore plus vrai si le capot est abîmé ou arraché. Cet aspect aérodynamique est rendu nécessaire par la destination du dispositif optique. En effet celui-ci peut être amené à servir sur des casques servant à des pilotes et/ou équipiers dans les avions d'armes. En cas d'éjection du porteur il ne faut pas qu'une prise au vent apparent trop forte sur le dispositif optique entraîne des efforts trop importants sur la nuque du porteur. En effet celle-ci, sous l'effet de ces efforts, pourrait alors se rompre entraînant la mort du porteur. La présence de ces carénages est aussi utile pour la mise en place d'éléments 207 et 208 nécessaires au fonctionnement du dispositif optique. Ces éléments 207 et 208 sont modélisés sur la figure 2 par des cylindres. Leurs fonctions n'intéresse pas l'invention, mais leur mise en place doit être possible. En variante, au lieu que le caisson 201 soit monobloc, il peut être formé de deux demi-caissons épousant chacun la forme d'une des branches du U. Dans ce cas ces deux demi-caissons sont complémentaire. Par la forme en U avec deux branches, on entend également d'autres formes de dispositifs (en V par exemple) avec des solutions et des dispositifs différents du caisson et du couvercle. En pratique toute structure ouverte avec deux branches est concernées, même si ces deux branches ne se déploient pas dans un plan mais sur une surface courbe ou déformée.

La partie avant du caisson 201 a une section en forme de U. Lorsque le dispositif est en place, l'ouverture du U est située vers le bas. Le caisson 201 comporte des cloisons 209 à 211 qui sont mises en place grâce à l'ouverture du U. Le caisson 201 comporte d'autres cloisons non représentées. Ces cloisons ont en commun d'être évidées en leur centre afin de permettre la mise en place d'éléments du dispositif optique. Ces cloisons 209 à 211 sont collées à l'intérieur du caisson 201. Elles participent ainsi à l'amélioration de la rigidité du caisson 201. D'autre part le caisson comporte des ouvertures 212 à 214 dont le rôle est de permettre la mise en place d'éléments du dispositif optique, notamment pour l'ouverture 212 de lentilles qui seront fixées dans les cloisons 209 à 211. Ainsi l'ouverture 212 est suffisamment grande pour permettre le passage d'une lentille du dispositif optique. L'ouverture 212 permet d'atteindre chacune des cloisons situées de son côté du caisson 201 en U. Une fois les éléments du dispositif optique en place, les ouvertures 211 à 214 seront refermées grâce à des panneaux correspondant à la forme des différentes ouvertures et collés sur le caisson 201. Le caisson 201 retrouve ainsi son étanchéité et un surcroît de rigidité.

L'ouverture de la forme en U du caisson est refermée grâce à un couvercle qui est collé. Le caisson 201, les cloisons et le couvercle sont réalisés dans un matériau composite. Le matériau composite retenu est un stratifiée quasi isotrope composé d'un tissu de fibres de carbone dans une matrice époxy. Ce matériau possède des caractéristiques de résistance et rigidité rapportées à la masse meilleures que les métaux. Son coefficient de dilatation moyen est très faible et sa résistance chimique compatible d'une utilisation en environnement militaire.

Ce type de matériau composite est utilisé dans la réalisation de supports de miroirs de télescopes spatiaux pour sa faible sensibilité aux variations de températures et sa durée de vie importante. Il est également préféré à l'aluminium pour la réalisation des cellules des hélicoptères militaires modernes. Ce matériau est très peu conducteur électrique et est compatible avec le système de détection de position électromagnétique. C'est ce système de détection électromagnétique qui permet au pilote de viser une cible. En effet ce système détecte la position du casque dans l'habitacle et détermine dans quelle direction le pilote regarde.

Si les caractéristiques de ce matériau composite sont idéales pour cette application de structure optomécanique, sa mise en oeuvre délicate le réserve à des formes très simples. Il est en effet impossible de réaliser des pièces de géométrie complexe, habituellement réalisées en fonderie pour les métaux ou en injection pour les plastiques, avec des techniques de stratification classiques ou même en injection de résine. Habituellement, le corps d'une optique de viseur de casque est de géométrie complexe car il épouse au plus près la forme des lentilles et du faisceau optique afin d'obtenir une masse minimale et également parce qu'il comporte tous les épaulements nécessaires au positionnement des miroirs et lentilles. La tolérance de positionnement des lentilles et miroirs est de l'ordre de 0,01 mm et 0,1 mrad. Dans le cas de la structure en matériau composite, on a choisi d'épouser la forme initiale du capotage qui était lui-même réalisé en composite stratifié, on a inséré des éléments optiques dans le caisson 201 fermé.

Les tolérances de fabrication de la structure composite sont comprises entre 0,2 et 0,5 mm. Les tolérances optiques sont récupérées par un positionnement précis des lentilles.

La figure 3 montre un caisson 301, comportant une cloison 302. Le caisson est fermé par un couvercle 303. La cloison 302 est évidée en son centre par une forme circulaire. Cela permet le positionnement d'éléments du dispositif optique, et la circulation des rayons lumineux issu des sources d'images liées au dispositif optique. La figure 3 montre aussi une lentille 304 positionnée à l'intérieur de la cloison 302. La lentille 304 est maintenue en place grâce à des points de colle 305, 306 et 307. II s'agit alors d'une lentille intermédiaire. C'est à dire si on considère les trois cloisons de la figure 2, 209 à 211, il s'agirait de la cloison 210. En effet celle-ci est située entre les cloisons 209 et 211. Les lentilles fixées dans les cloisons 209 et 211 seront alors maintenues en place avec un filet de colle faisant le tour de la lentille. Cela aura pour effet de créer un joint qui assurera l'étanchéité entre les cloisons 209 et 211.

La figure 4 montre une cloison et une lentille vues de profil. La figure 4 montre ainsi une cloison 401 contenue dans un caisson 402 refermé par un couvercle 405. La cloison 401 est plus épaisse qu'une lentille 403. La lentille 403 est fixée dans la cloison 401 grâce à des points de colle 404. Le fait que la cloison 401 soit plus épaisse que la lentille 403 permet de positionner celle-ci sur toute l'épaisseur de la cloison. On peut ainsi trouver une position correcte pour la lentille. Les points de colle sont réalisés par injection à travers des orifices percés dans le caisson 402 et/ou la cloison 401. Ces trous sont rebouchés par la suite avec cette même colle.

Bien que la surface du caisson ainsi obtenue soit supérieure à celle d'un corps passant au plus près de l'optique, le bilan de masse et de rigidité reste positif. En effet le matériau composite utilisé a de meilleures caractéristiques intrinsèques et nécessite donc moins de matière pour une performance équivalente. De plus la structure présente une section plus importante et donc une plus grande inertie, elle nécessite donc une épaisseur moindre pour une rigidité équivalente. Enfin les renforts supplémentaires sont supprimés ainsi que le capotage protégeant l'optique.

Le gain de masse global par rapport à une architecture classique est supérieur à 20 %. Ce gain est surtout sensible dans la zone frontale du dispositif optique, ce qui place le centre de masse de l'ensemble, casque plus dispositif optique, dans une zone plus favorable pour le confort et la sécurité du porteur. De plus cette structure en matériau composite permet de conserver des performances optiques dans toutes les conditions de la mission, que ce soit thermique ou dynamique.

La possibilité de positionner les lentilles par collage réduit les dispersions et les rebuts en production. Le surcoût de la structure en composite qui est lié aux opérations manuelles lors de sa fabrication est en partie compensé par les économies réalisées en réduisant les usinages de précision pour le positionnement des lentilles, la réduction du nombre de pièces constitutives du dispositif optique et la réduction des risques de non-qualité. En effet une tolérance de fabrication de 0,2 à 0,5 mm n'est pas difficile à tenir.

## Revendications

1. Dispositif (101) optique, comportant des moyens de fixation (106) afin que ledit dispositif puisse être fixé sur un casque (107), et ayant une forme en U, comportant une structure mécanique et un module optique où la structure mécanique comporte :
- un caisson (201) ouvert de section en forme de U, ledit caisson (201) étant lui-même incurvé suivant la forme en U du dispositif,
- un couvercle (303) destiné à fermer le caisson ouvert,
- une pluralité de cloisons (209-211) évidées en leur centre disposées dans le caisson le long de la forme en U, chaque cloison étant destinée à la circulation de rayons lumineux au travers d'icelle, la section du caisson étant plus importante que l'ouverture des cloisons, ce qui impartit au caisson (201) une relative rigidité.

2. Dispositif selon la revendication 1, où le couvercle est sensiblement plat.

3. Dispositif selon l'une des revendications précédentes, où les cloisons (209-211) évidées en leur centre sont destinées à servir de support à des éléments du module optique.

4. Dispositif selon la revendication 3, où les cloisons (209, 211) sont disposées transversalement par rapport aux parois du caisson (201).

5. Dispositif selon l'une quelconque des revendications 3 à 4, où les cloisons (401) ont une épaisseur supérieure à celle des éléments du module optique (403) afin de permettre un jeu dans le positionnement des ces éléments.

6. Dispositif selon l'une quelconque des revendications précédentes, où des éléments du module optique sont collés soit par des points (305-306-307) de colle, soit par un joint de colle lorsqu'ils sont situés aux extrémités du dispositif optique.

7. Dispositif selon l'une quelconque des revendications précédentes, où le caisson comporte des ouvertures (212-214) permettant la mise en place d'éléments du module optique.

8. Dispositif selon la revendication 7, où les ouvertures (212, 214) sont destinées à être refermées par des panneaux collés sur le caisson (201).

9. Dispositif selon l'une des revendications précédentes, où les éléments composant le module optique et positionnés dans la structure mécanique sont des lentilles (304).

10. Dispositif selon l'une des revendications précédentes, où le couvercle et le caisson sont collés.

11. Dispositif selon la revendication 9, où les lentilles sont collées.

12. Dispositif selon l'une quelconque des revendications précédentes, où la structure mécanique est aérodynamique.

13. Dispositif selon l'une quelconque des revendications précédentes, où le caisson, et/ou le couvercle, et/ou les cloisons sont en matériau composite de préférence composé d'un tissu de fibres de carbone dans une matrice époxy stratifié.

14. Dispositif selon l'une quelconque des revendications précédentes, où le caisson comporte deux demi-caissons épousant chacun la forme d'une des branches du U du dispositif.

## Patentansprüche

1. Optische Vorrichtung (101) mit Befestigungsmitteln (106), damit die Vorrichtung an einem Helm (107) befestigt werden kann, und die U-förmig ist, mit einer mechanischen Struktur und einem optischen Modul, wobei die mechanische Struktur aufweist:
- ein offenes Gehäuse (201) mit U-förmigem Querschnitt, wobei das Gehäuse (201) selbst gemäß der U-Form der Vorrichtung gekrümmt ist,
- einen Deckel (303), der zum Schließen des offenen Gehäuses bestimmt ist,
- mehrere in ihrer Mitte ausgehöhlte Trennwände (209-211), die im Gehäuse entlang der U-Form angeordnet sind, wobei jede Trennwand für die Zirkulation von Lichtstrahlen durch diese hindurch bestimmt ist, wobei der Querschnitt des Gehäuses größer ist als die Öffnung der Trennwände, was dem Gehäuse (201) eine gewisse Steifheit verleiht.

2. Vorrichtung nach Anspruch 1, wobei der Deckel im Wesentlichen flach ist.

3. Vorrichtung nach einem der vorhergehenden Ansprüche, wobei die in ihrer Mitte ausgehöhlten Trennwände (209-211) dazu bestimmt sind, als Träger für Elemente des optischen Moduls zu dienen.

4. Vorrichtung nach Anspruch 3, wobei die Trennwände (209, 211) bezüglich der Wände des Gehäuses (201) quer angeordnet sind.

5. Vorrichtung nach einem der Ansprüche 3 und 4, wobei die Trennwände (401) eine größere Dicke als die Elemente des optischen Moduls (403) aufweisen, um einen Spielraum bei der Positionierung dieser Elemente zu erlauben.

6. Vorrichtung nach einem der vorhergehenden Ansprüche, wobei Elemente des optischen Moduls entweder durch Kleberpunkte (305-306-307) oder durch eine Klebverbindung geklebt werden, wenn sie sich an den Enden der optischen Vorrichtung befinden.

7. Vorrichtung nach einem der vorhergehenden Ansprüche, wobei das Gehäuse Öffnungen (212-214) aufweist, die das Einsetzen von Elementen des optischen Moduls erlauben.

8. Vorrichtung nach Anspruch 7, wobei die Öffnungen (212, 214) dazu bestimmt sind, von auf das Gehäuse (201) geklebten Platten verschlossen zu werden.

9. Vorrichtung nach einem der vorhergehenden Ansprüche, wobei die den optischen Modul bildenden und in der mechanischen Struktur positionierten Elemente Linsen (304) sind.

10. Vorrichtung nach einem der vorhergehenden Ansprüche, wobei der Deckel und das Gehäuse geklebt sind.

11. Vorrichtung nach Anspruch 9, wobei die Linsen geklebt sind.

12. Vorrichtung nach einem der vorhergehenden Ansprüche, wobei die mechanische Struktur aerodynamisch ist.

13. Vorrichtung nach einem der vorhergehenden Ansprüche, wobei das Gehäuse und/oder der Deckel und/oder die Trennwände aus einem Verbundmaterial bestehen, das vorzugsweise aus einem Kohlenstofffasergewebe in einer geschichteten Epoxymatrix zusammengesetzt ist.

14. Vorrichtung nach einem der vorhergehenden Ansprüche, wobei das Gehäuse zwei Halbgehäuse aufweist, die je die Form eines der Schenkel des U der Vorrichtung annehmen.

## Claims

1. Optical device (101) comprising fastening means (106) so that the said device can be fastened to a helmet (107) and having a U shape, comprising a mechanical structure and an optical module, in which the mechanical structure comprises:
- an open box (201) of U-shaped cross section, the said box (201) itself being curved according to the U shape of the device,
- a cover (303) intended to close the open box,
- a plurality of partitions (209 - 211) apertured in their centre and arranged in the box along the U shape, each partition being intended for the circulation of light rays through it, the cross section of the box being greater than the opening in the partitions, thus imparting relative rigidity to the box (201) .

2. Device according to Claim 1, in which the cover is substantially flat.

3. Device according to either of the preceding claims, in which the partitions (209 - 211) apertured in their centre are intended to serve as a support for elements of the optical module.

4. Device according to Claim 3, in which the partitions (209, 211) are arranged transversely with respect to the walls of the box (201) .

5. Device according to either one of Claims 3 and 4, in which the partitions (401) have a thickness greater than the thickness of the elements of the optical module (403) so as to allow a play in the positioning of these elements.

6. Device according to any one of the preceding claims, in which elements of the optical module are bonded either by glue points (305 - 306 - 307) or by a glue joint when they are situated at the ends of the optical device.

7. Device according to any one of the preceding claims, in which the box comprises openings (212 - 214) for fitting elements of the optical module.

8. Device according to Claim 7, in which the openings (212, 214) are intended to be closed off by panels bonded to the box (201) .

9. Device according to one of the preceding claims, in which the elements making up the optical module and positioned in the mechanical structure are lenses (304) .

10. Device according to one of the preceding claims, in which the cover and the box are bonded.

11. Device according to Claim 9, in which the lenses are bonded.

12. Device according to any one of the preceding claims, in which the mechanical structure is aerodynamic.

13. Device according to any one of the preceding claims, in which the box and/or the cover and/or the partitions are in composite material, preferably composed of a fabric of carbon fibres in a laminated epoxy matrix.

14. Device according to any one of the preceding claims, in which the box comprises two half-boxes each matching the shape of one of the U-branches of the device.
